(19) Europäisches Patentamt / European Patent Office / Office européen des brevets

(11) **EP 3 317 913 B1**

(12) # FASCICULE DE BREVET EUROPEEN

(45) Date de publication et mention
de la délivrance du brevet:
**18.10.2023 Bulletin 2023/42**

(21) Numéro de dépôt: **16748327.0**

(22) Date de dépôt: **30.06.2016**

(51) Classification Internationale des Brevets (IPC):
**H01M 14/00** *(2006.01)*    **C25C 7/00** *(2006.01)*
**C25F 7/00** *(2006.01)*

(52) Classification Coopérative des Brevets (CPC):
**C25C 7/00; C25F 7/00; H01M 14/00;** Y02E 60/10;
Y02P 70/50

(86) Numéro de dépôt international:
**PCT/FR2016/051641**

(87) Numéro de publication internationale:
**WO 2017/001786 (05.01.2017 Gazette 2017/01)**

(54) **DISPOSITIF ÉLECTROCHIMIQUE POUR LE STOCKAGE DE L'ÉNERGIE ÉLECTRIQUE**

ELEKTROCHEMISCHE VORRICHTUNG ZUR SPEICHERUNG ELEKTRISCHER ENERGIE

ELECTROCHEMICAL DEVICE FOR STORING ELECTRICAL POWER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats de validation désignés:
**MA**

(30) Priorité: **30.06.2015 FR 1556149**

(43) Date de publication de la demande:
**09.05.2018 Bulletin 2018/19**

(73) Titulaire: **Universal Energy Storage Pte. Ltd
059763 (SG)**

(72) Inventeur: **JEHAN, Michel
74890 Fessy (FR)**

(74) Mandataire: **Talbot, Alexandre
Cabinet Hecké
28 Cours Jean Jaurès
38000 Grenoble (FR)**

(56) Documents cités:
**EP-A1- 0 264 263     WO-A1-2016/027031
FR-A1- 2 948 654     US-A1- 2010 213 052**

## Description

### Domaine technique de l'invention

L'invention est relative à un dispositif électrochimique pour le stockage de l'énergie électrique et à un procédé de stockage de l'énergie électrique.

### État de la technique

Le stockage massif de l'énergie électrique présente des enjeux considérables. Il est, en effet, essentiel d'avoir des unités de stockage pouvant fonctionner dans une très large gamme de puissance et de capacité tout en privilégiant les aspects volumiques réduits.

Une voie prometteuse pour stocker de telles énergies est la voie électrochimique. Aujourd'hui, la technologie électrochimique la plus performante et la plus sure est celle de l'électrolyse des métaux non ferreux en milieu aqueux et, plus particulièrement, l'électrolyse des métaux qui ont un grand contenu énergétique tels que le zinc ou le manganèse.

De plus, la technologie est simple et bon marché : il serait donc intéressant de pouvoir faire fonctionner une telle électrolyse de façon réversible.

La demande WO 2011/015723 décrit un procédé de co-génération simultanée d'énergie électrique et d'hydrogène par voie totalement électrochimique. Le procédé comporte une phase de stockage d'électricité par électrolyse d'une solution d'un métal électrolysable et formation d'une pile métal électrolysable-hydrogène et, une phase de récupération d'électricité et génération d'hydrogène par fonctionnement de ladite pile.

Cependant, dans de tels dispositifs, les volumes des réacteurs sont très importants pour pouvoir fournir une grande quantité d'énergie électrique.

De plus, pour des applications de puissance importante, les dépôts métalliques sont souvent inhomogènes, ce qui réduit les performances électrochimiques des dispositifs, voire provoque les mises en court circuit des électrodes par formation de dendrites métalliques.

Le document US 2010/0213052 traite d'une cellule électrolytique muni de plusieurs paires d'électrodes qui sont agencées pour définir plusieurs troncs de cônes alignés verticalement ou sous la forme d'une spirale. Les ouvertures définies par les différentes électrodes sont alignées verticalement. Le document EP 0264263 décrit une cellule électrolytique avec des électrodes mobiles et inclinées.

Le document FR2948654 décrit un procédé de cogénération d'énergie électrique et d'hydrogène en utilisant une cellule électrolytique capable de déposer un métal et dégager de l'oxygène ou de dissoudre le métal avec production d'hydrogène.

### Objet de l'invention

L'invention a pour but de remédier aux inconvénients de l'art antérieur et, en particulier, de proposer un dispositif permettant de stocker une grande quantité d'énergie électrique.

On tend vers cet objet par un dispositif électrochimique pour le stockage de l'énergie électrique comprenant un réacteur, muni d'une paroi latérale, d'une paroi supérieure, d'une paroi inférieure, d'une entrée d'électrolyte, d'une sortie d'électrolyte, et d'une pluralité d'électrodes Ex avec x un entier allant de 1 à n, disposées dans le réacteur, les électrodes étant sous la forme de cônes et de troncs de cônes, disposées en alternance, et agencées de sorte que la partie évasée de chaque électrode soit dirigée vers la paroi supérieure ou la paroi inférieure du réacteur, les troncs de cônes venant en contact avec la paroi latérale, les sommets des cônes définissant un axe traversant les zones ouvertes des troncs de cône.

On tend également vers cet objet par un procédé de stockage d'énergie électrique, comprenant les étapes successives suivantes :

- fournir le dispositif électrochimique précité pour le stockage de l'énergie électrique,
- introduire un électrolyte dans le dispositif électrochimique, l'électrolyte contenant des ions métalliques,
- relier électriquement la première électrode à la borne négative d'une alimentation électrique et la deuxième électrode à la borne positive de d'une alimentation électrique,
- fournir de l'énergie électrique pour réduire les ions métalliques sur les électrodes du dispositif électrochimique, de façon à former une pile métal électrolysable.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente une vue schématique, et en coupe, un réacteur d'un dispositif électrochimique, selon un mode de réalisation de l'invention,
- la figure 2 représente schématiquement, en coupe, une électrode additionnelle d'un dispositif électrochimique, selon l'invention.

### Description d'un mode de réalisation préférentiel de l'invention

L'invention est relative à un dispositif électrochimique pour le stockage de l'énergie électrique de façon directe et réversible.

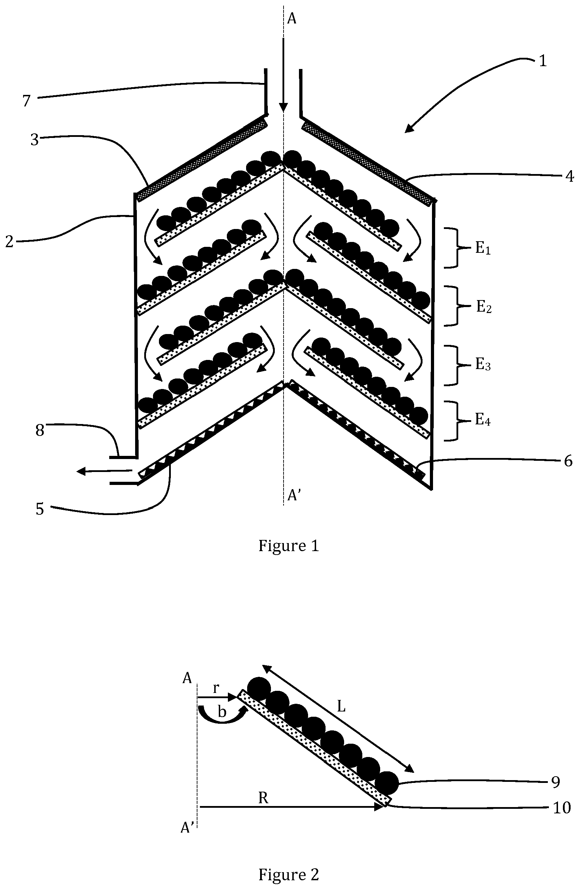

Comme représenté à la figure 1, le dispositif électrochimique pour le stockage de l'énergie électrique comprenant :

- un réacteur 1, muni de :

  ◦ une paroi latérale 2,
  ◦ une paroi supérieure 3,
  ◦ une paroi inférieure 5,
  ◦ une entrée d'électrolyte 7,
  ◦ une sortie d'électrolyte 8,

- une pluralité d'électrodes Ex avec x un entier allant de 1 à n, disposées dans le réacteur, les électrodes étant sous la forme de cônes et de troncs de cônes, disposées en alternance, et agencées de sorte que la partie évasée de chaque électrode soit dirigée vers la paroi supérieure 3 ou la paroi inférieure 5 du réacteur 1, les troncs de cônes venant en contact avec la paroi latérale 2, les sommets des cônes définissant un axe traversant les zones ouvertes des troncs de cône.

Le réacteur 1 est, préférentiellement, un réacteur fermé dans lequel circule l'électrolyte. Le réacteur 1 est, par exemple, une cuve. La paroi latérale 2 est, préférentiellement, circulaire.

Le réacteur 1 est fermé, dans sa partie supérieure, par une paroi supérieure 3 aussi appelée couvercle.

Le réacteur est fermé, dans sa partie inférieure, par une paroi inférieure 5 aussi appelée fond.

La paroi inférieure 5 et la paroi supérieure 3 sont, préférentiellement, de forme conique. Le sommet du cône de la paroi supérieure 3 et le sommet du cône de la paroi inférieure 5 définisse un axe AA'.

Par forme conique, on entend que ces parois présentent une surface conique : leur surface est définie par une droite, ou une courbe sensiblement droite, passant par un point fixe, ou sommet, et un point variable décrivant une courbe plane fermée.

Préférentiellement, la section fermée a une forme cylindrique ou ovoïde.

Le cône est avantageusement un cône de révolution et la paroi latérale 2 est un cylindre, la section fermée des parois inférieure 5 et supérieure 3 formant un cercle de même dimension que la paroi latérale 2.

Avantageusement, la paroi supérieure 3 est configurée pour former une première électrode principale 4.

Selon un premier mode de réalisation, la paroi supérieure 3 forme la première électrode 4.

Selon un autre mode de réalisation la paroi supérieure 3 sert de support mécanique à la première électrode 4. La première électrode 4 est, avantageusement, soutenue par le couvercle du réacteur. Le dispositif est robuste et simple à mettre en oeuvre.

La première électrode 4 peut être l'anode principale ou la cathode principale du dispositif électrochimique.

Dans un mode de fonctionnement préférentiel, la première électrode 4 forme la cathode principale du dispositif électrochimique.

La première électrode 4 est alors connectée à une borne négative d'une alimentation électrique en courant continu.

Le couvercle est, avantageusement, électriquement conducteur. Il est raccordé électriquement avec la borne négative de l'alimentation électrique en courant continu pour polariser la première électrode qui baigne dans l'électrolyte.

La première électrode 4, destinée à être en contact avec l'électrolyte, peut être recouverte d'un revêtement pour favoriser les réactions électrochimiques et sa résistance aux attaques chimiques et gazeuse.

La première électrode 4 est, avantageusement, réalisée dans un matériau inattaquable par l'oxygène en milieu acide. Elle est, par exemple, recouverte de nitrure de titane sur sa surface, ou encore en acier revêtu de céramiques conductrices de l'électricité. Cette céramique conductrice est non oxyde.

Préférentiellement, la première électrode 4 est en acier inoxydable.

La paroi inférieure 5 est configurée pour former une deuxième électrode principale 6.

Selon une mode de réalisation particulier, la paroi inférieure 5 forme la deuxième électrode 6.

Selon un autre mode de réalisation, la paroi inférieure 5 sert de support mécanique à la deuxième électrode 6.

La deuxième électrode est, par exemple en acier inoxydable recouvert de plomb.

Préférentiellement, la deuxième électrode est une anode. Il s'agit de l'anode principale du dispositif électrochimique.

Le fond du réacteur 1 est électriquement conducteur et est porté au potentiel de la borne positive de l'alimentation extérieure.

Les électrodes $E_x$ sont disposées entre la paroi inférieure 5 et la paroi supérieure 3. Les électrodes $E_x$ sont également appelées électrodes additionnelles.

L'électrode $E_1$ est l'électrode additionnelle la plus proche de la première électrode 4. Il s'agit de l'électrode proximale par rapport à la première électrode 4.

L'électrode $E_n$ est l'électrode additionnelle la plus éloignée de la première électrode 4. Il s'agit de l'électrode distale par rapport à la première électrode 4.

La figure 1 représente, par exemple, un réacteur comprenant quatre électrodes additionnelles $E_1$, $E_2$, $E_3$, et $E_4$. L'électrode distale est l'électrode $E_4$.

Le nombre d'électrodes $E_x$ dépend de la puissance électrique désirée.

Comme représenté sur la figure 1, les électrodes additionnelles $E_x$ sont, avantageusement, sous la forme d'un cône entier ou d'un cône tronqué. Les sommets des électrodes coniques et les ouvertures des électrodes en troncs de cône sont alignés sur l'axe AA'. Les sommets et les ouvertures des cônes sont sont, avantageusement, tous orientés dans le même sens.

Préférentiellement, les sommets et les ouvertures sont orientés vers la paroi supérieure 3, la forme évasée des cônes ou des troncs de cône étant disposée vers la paroi inférieure 5.

Dans un mode de réalisation particulier, les électrodes Ex avec x un entier impair sont sous la forme d'un cône entier et les électrodes Ex avec x un entier pair sont sous la forme d'un cône tronqué.

Les électrodes $E_x$ avec x un entier impair sont séparées de la paroi latérale 2 du réacteur 1 par un espace.

Les électrodes $E_x$ avec x un entier pair sont en contact avec la paroi latérale 2 du réacteur 1. La forme tronquée de ces électrodes permet l'écoulement du fluide au niveau du sommet du cône.

Ce mode de réalisation est particulièrement efficace et compact. Cependant, une configuration inversée est également possible.

Selon un mode de réalisation préférentiel, l'arrivée d'électrolyte 4 du réacteur est disposée, dans la paroi supérieure 3, au niveau du sommet du cône formant la première électrode $E_1$.

L'électrolyte est, par exemple, propulsé, à travers le couvercle, dans le réacteur, par une pompe volumétrique, qui permet d'en régler le débit et la pression.

La sortie d'électrolyte 8 est disposée dans la partie inférieure du réacteur 1, entre l'électrode $E_n$ et la paroi inférieure 5 du réacteur.

La sortie d'électrolyte 8 peut être formée d'un ou plusieurs orifices, disposés au niveau du fond du réacteur 1.

En variante, l'entrée d'électrolyte 7 et la sortie d'électrolyte 8 peuvent être inversées.

Un chemin d'écoulement de l'électrolyte est ainsi formé (représenté schématiquement par les flèches sur la figure 1), le chemin allant de l'entrée d'électrolyte 7 à la sortie d'électrolyte 8, en passant alternativement entre les électrodes $E_x$ avec x un entier impair et la paroi du réacteur et dans les ouvertures disposées au niveau du sommet des cônes tronqués des électrodes $E_x$ avec x un entier pair.

Dans ce mode de réalisation, la circulation de l'électrolyte est naturelle et gravitaire.

Cette architecture permet d'obtenir une excellente circulation des flux d'électrolyte, son renouvellement permanent au droit de chaque électrode.

Une telle géométrie, entièrement symétrique, permet de délivrer une circulation pertinente des courants électriques d'une électrode à l'autre et de supprimer les courants de fuite.

Cependant, en variante des architectures non symétriques peuvent être possibles, mais elles sont moins performantes.

La maitrise de la circulation des courants électriques, associée à une diminution des turbulences, aboutit à une meilleure homogénéité des dépôts métalliques. Avantageusement, les pertes thermiques sont diminuées et bien distribuées.

Le potentiel électrochimique des électrodes $E_x$

est dit flottant c'est à dire que la différence de potentiel totale apportée par le générateur électrique entre l'électrode 6 et l'électrode 3 supportée par le réacteur est répartie naturellement entre chacune des électrodes $E_x$.

Le « potentiel flottant » s'équilibre de façon naturelle dans le bain d'électrolyte circulant entre les électrodes. Ce potentiel dépend de la différence de potentiel appliquée entre la cuve et le couvercle du réacteur, ainsi que du nombre d'électrodes $E_x$.

Préférentiellement, comme représenté sur les figures 1 et 2, les électrodes additionnelles $E_x$ sont bipolaires. Par bipolaire, on entend que les électrodes $E_x$ peuvent jouer à la fois le rôle d'anode et de cathode. Une électrode bipolaire présente deux faces : une face anodique 9 et une face cathodique 10.

Pendant l'étape d'électrodéposition, le métal se dépose sur la face cathodique et l'oxygène natif se forme sur la face anodique.

Ces électrodes particulières sont, avantageusement, conçues dans des matériaux adaptés à ces conditions électrochimiques, et en particulier à la bipolarité. Les électrodes sont, par exemple, en plomb, en nickel, en titane avec, avantageusement, pour chacun desdits matériaux des revêtements électriquement conducteurs comme les céramiques non oxydes. Les céramiques sont, avantageusement, non oxydes. Il peut s'agir de carbure de silicium (SiC), de carbure de titane (TiC), de nitrure de silicium ($Si_3N_4$), de nitrure de titane (TiN), etc.

Les électrodes peuvent aussi être des électrodes bipolaires mixtes en oxyde de plomb et plomb, ou encore en alliage de plomb.

Avantageusement, la face anodique 9 et la face cathodique sont réalisées en matériaux différents.

La face cathodique est, par exemple en acier inoxydable.

Préférentiellement, le stockage de l'énergie électrique est réalisé sur des électrodes bipolaires mixtes en oxyde de plomb et plomb.

La face anodique comprend, préférentiellement, un fil métallique enroulé selon une spirale conique. Il s'agit, par exemple, d'une spirale conique de "Pappus". Cette configuration conduit à une forte augmentation de la surface spécifique d'échange par un coefficient équivalent à pi (3,14) conduisant à la rétention de l'oxygène natif. Avantageusement, il n'y a pas dégagement gazeux principal lors des réactions électrochimiques.

Le fil métallique peut présenter une section cylindrique, comme représenté sur la figure 2, ou encore une section étoilée ou cruciforme.

Avantageusement, la section est une section cylindrique.

Préférentiellement, le fil métallique enroulé est un fil de plomb.

Préférentiellement, l'angle b représenté sur la figure 2, défini par l'axe AA' et l'apothème L du cône, est supérieur à 45°. Encore plus préférentiellement, l'angle b est supérieur à 50°C pour éviter que les oxydes ne se détachent de l'électrode.

concentration...

Avantageusement, les spires de la spirale sont jointives de manière à augmenter la quantité de matériau actif sur chaque électrode. Préférentiellement, la face anodique 9 des électrodes additionnelles $E_x$ est recouverte d'un revêtement en plomb et le revêtement en plomb est recouvert de ladite spirale.

La surface S de chaque électrode additionnelle $E_x$ de forme conique est définie par :

$$S = \pi.L.(R+r)$$

Avec :

L l'apothème du cône,
R rayon extérieur du cône,
r rayon intérieur du cône,

L pouvant être défini par L = r/sin b, avec b l'angle au sommet du cône, on obtient : $S = \pi.(r/\sin b).(R+r)$

Pour R=0,85m, r=0,05m et sinb = 0,766, la surface de l'électrode est de 2,97m$^2$.

Cette configuration spécifique d'empilement d'électrodes additionnelles de formes coniques ou tronconiques, dans un volume cylindrique forme, dans un volume très réduit, une surface d'échange très importante.

Cette surface d'échange est encore augmentée avec la configuration particulière des faces anodiques des électrodes, i.e. avec un fil métallique enroulé selon une spirale conique.

Les électrodes bipolaires permettent la totale réversion de polarité et de fonctionnement en contre-électrodes dans la phase d'attaque chimique lorsque les polarités s'inversent et que le réacteur est utilisé comme générateur d'électricité. Dans la phase de production d'électricité, une phase d'attaque chimique est réalisée sur le métal déposé sur les faces cathodiques et un courant électrique (effet pile) est généré.

Par exemple, pour 51 électrodes additionnelles bipolaires de forme conique (électrodes en tronc de cône pour les électrodes additionnelles $E_x$ impaires et électrodes en cône pour les électrodes additionnelles $E_x$ paires), d'une surface d'environ 3m$^2$ dans une cuve d'une hauteur H de 1,5m, la puissance P fournie est P = E.I.

Avec E = 53 couples x 2,85V ≈ 150V et I = 400A/m$^2$ × 3m$^2$ = 1200A, la puissance est d'environ 180kW.

Avantageusement, l'ensemble des électrodes additionnelles $E_x$ bipolaires forme donc un empilement compact de surfaces électrochimiques en vis-à-vis les unes aux autres dont une face se comporte en anode et l'autre face en cathode.

Lors du fonctionnement du dispositif électrochimique, l'électrolyte s'écoule, dans un premier temps, entre la première électrode 4 et la face anodique de l'électrode $E_1$, jusqu'à la paroi latérale 2. Puis il remonte le long de l'électrode additionnelle $E_2$, entre la face catho-dique de l'électrode $E_1$ et la face anodique de l'électrode $E_2$. Au niveau du sommet de l'électrode $E_2$, il passe à travers l'ouverture positionnée au sommet de ladite électrode et s'écoule entre la face cathodique de l'électrode $E_2$ et la face anodique de l'électrode $E_3$ jusqu'à atteindre la paroi latérale 2, et ainsi de suite jusqu'au fond du réacteur.

L'association d'électrodes bipolaires à un empilement de type conique assure une répartition idéale des courants électriques passant d'une électrode bipolaire vers une autre électrode tout en assurant un écoulement gravitaire précis et contrôlé des flux d'électrolyte de la solution chimique contenant le métal à déposer.

Les électrodes additionnelles $E_x$ ont, avantageusement, la même valeur d'aire.

La surface active de réaction reste homogène d'un couple à l'autre, depuis le haut du réacteur, vers le bas extérieur, et une iso-densité de courant est obtenue.

L'empilement des électrodes additionnelles $E_x$, de surface active identique, permet d'obtenir une maitrise parfaite de la surface des couples d'électrodes qui est ainsi constante.

Cet assemblage d'électrodes permet d'obtenir de grandes surfaces de réaction dans un encombrement extrêmement réduit. Le volume du réacteur 1 peut être considérablement diminué.

De tels dispositifs permettent de stocker de plus grandes quantités d'énergie qu'un dispositif avec des électrodes planes, pour un même volume de réacteur.

Selon un mode de réalisation préférentiel, la paroi latérale 2 du réacteur est électriquement isolante, de manière à empêcher le contact électrique entre la première électrode 4 et la deuxième électrode 6.

La paroi latérale 2 électriquement isolante permet d'assurer l'isolation électrique non seulement des électrodes $E_x$ entre elles, mais aussi avec les première 4 et deuxième 6 électrodes.

Avantageusement, la paroi latérale 2 du réacteur joue également le rôle de support mécanique pour les électrodes. La position des électrodes peut être égalisée, grâce à des cales disposées dans la paroi latérale 2 du réacteur.

Les cales sont avantageusement en matériau électriquement isolant.

L'isolation électrique des électrodes $E_x$ à l'intérieur du réacteur se fait par exemple par le support d'un anneau isolant électriquement, en relief dans le corps externe du réacteur.

Cette configuration est particulièrement utilisée lorsque le réacteur 1 comporte des électrodes en plomb, dans le cas de stockage direct de l'électricité, et sans dégagement gazeux (réacteur travaillant à la pression atmosphérique).

Préférentiellement, les câles sont configurées pour que les cônes formant les électrodes $E_x$, la paroi supérieure 3 et la paroi inférieure 5 soient sensiblement parallèles entre eux.

De manière préférentielle, la distance entre

deux électrodes $E_x$ consécutives est sensiblement le même en tout point selon n'importe quel axe parallèle à l'axe AA'. Les potentiels et les réactions chimiques sont ainsi mieux répartis. Préférentiellement, la distance entre les électrodes est comprise entre 0,5cm et 1,5cm, ce qui permet de réduire considérablement les pertes ohmiques.

La paroi latérale peut également comporter un dispositif de vidange, avantageusement disposé dans la partie inférieure du réacteur. Il est également possible d'utiliser une double paroi latérale, la paroi la plus interne étant munie de clapets à la base de chaque électrodes $E_x$ pour permettre une vidange plus efficace.

Le procédé réversible de stockage d'énergie électrique comprend les étapes successives suivantes :

- fournir un dispositif électrochimique tel que décrit précédemment,
- introduire un électrolyte dans le dispositif électrochimique, l'électrolyte contenant des ions métalliques,
- relier électriquement la première électrode à la borne négative d'une alimentation électrique et la deuxième électrode à la borne positive de d'une alimentation électrique,
- fournir de l'énergie électrique pour réduire les ions métalliques sur les électrodes, de façon à former une pile métal.

L'électrolyte contient des ions métalliques. Il peut s'agir, par exemple, de zinc, de manganèse ou de nickel, ou encore de cadmium.

Préférentiellement, l'électrolyte est une solution aqueuse à base de sulfate.

Les sulfates sont des sulfates métalliques, avantageusement, choisis parmi le plomb, le zinc, ou le cadmium.

La première étape électrochimique, i.e. le stockage de l'énergie, est réalisée par électrodéposition du métal en solution sur les électrodes du dispositif électrochimique.

Dans un premier temps, les ions métalliques en solution sont réduits, et le métal se dépose sur les cathodes des électrodes bipolaires.

Pendant la phase d'électrodéposition du métal sur les cathodes, i.e. sur la paroi du réacteur et sur les faces cathodiques des électrodes bipolaires emboîtées l'une dans l'autre, l'oxygène se dégage aux anodes.

L'oxygène transforme la phase métallique de la face anodique des électrodes bipolaires en oxyde.

L'électrodéposition est réalisée en utilisant l'énergie électrique.

Le stockage de l'énergie électrique est réalisé sous forme d'un dépôt métallique.

Lors de l'électrodéposition du métal, la teneur en métal de l'électrolyte évolue, diminuant progressivement. L'électrolyte, aussi appelé liqueur, peut être additionné en permanence avec de l'eau, contenant des sulfates d'un métal.

Le procédé comporte, après la formation de la pile métal électrolysable, une phase de fonctionnement de ladite pile, la phase de fonctionnement comprenant la dissolution du métal, précédemment déposé, de manière à produire de l'énergie électrique.

Au fur et à mesure de l'attaque chimique du métal, le métal est remis en solution dans l'électrolyte. La dissolution du métal produit une recombinaison de l'hydrogène en eau par la réduction simultanée des oxydes coté anode.

Le réacteur est devenu un générateur électrique par effet de piles.

L'énergie électrique est récupérée en reliant la première électrode 4 et la deuxième électrode 6 à un système de récupération d'énergie.

Préférentiellement, le dispositif comprend un réservoir d'électrolyte connecté à l'arrivée d'électrolyte 4 et à la sortie d'électrolyte 8 du réacteur 1, de manière à former un circuit fermé. L'électrolyte, utilisé pour former la pile métal électrolysable, est réutilisé pour la phase de fonctionnement de ladite pile.

Lors de la phase d'électrodéposition, l'électrolyte est stocké progressivement dans le réservoir de stockage. Le réservoir sert ensuite de réserve d'alimentation pour la phase de production d'énergie électrique.

Après la phase d'électrodéposition, l'électrolyte est, avantageusement, vidé du réacteur 1. Par cette vidange de l'électrolyte, il n'y a plus aucun passage de courant possible et le circuit est ouvert.

Le dépôt de métal réalisé est stable lorsque l'électrolyte est vidé de la cuve et n'est plus en contact dudit métal déposé. Le dépôt se conserve très longtemps sans s'oxyder, conservant intrinsèquement l'énergie électrique qu'il a consommée lors de son électrodéposition.

Avantageusement, l'électrolyte est toujours vidé lorsque les équipements sont hors courant.

L'électrolyte, utilisé pour former la pile métal électrolysable, est réutilisé pour la phase de fonctionnement de ladite pile.

L'électrolyte formé, dans l'opération précédente, circule en boucle fermée. La teneur initiale en acide, lors de l'étape de dissolution, est élevée et celle en métal est faible. Lors de la dissolution, le métal est remis en solution.

Par exemple, dans le cas du plomb, lors de production d'énergie électrique, la solution de sulfate de plomb, est régénérée pour une nouvelle utilisation future.

La circulation contrôlée de l'électrolyte permet, selon la configuration choisie, soit le stockage direct de l'énergie électrique, soit la production directe de l'énergie électrique en électricité.

Plusieurs réacteurs peuvent être couplés électriquement, en série ou en parallèle.

Préférentiellement, le dispositif comprend au moins un deuxième réacteur, les deux réacteurs étant montés en série, les réacteurs étant connectés électriquement.

Les deux réacteurs sont en communication fluidique : le deuxième réacteur est disposé entre le premier réacteur et le réservoir d'électrolyte, la sortie d'électrolyte du premier réacteur étant connectée à l'entrée d'électrolyte du deuxième réacteur, et la sortie d'électrolyte du deuxième réacteur étant connectée au réservoir d'électrolyte.

Le deuxième comporte également une pluralité d'électrodes. Le deuxième réacteur est, avantageusement, identique au premier réacteur.

Avantageusement, les connexions électriques pour le fonctionnement du dispositif électrochimique sont très simples à mettre en place.

Le réacteur est alimenté par un générateur en courant continu, lors de la phase de stockage d'énergie, et le réacteur se comporte lui-même en générateur contrôlé lors de la phase de dissolution du métal.

La première électrode est connectée à la borne négative, alors que la deuxième électrode, formant l'anode, est connectée à la borne positive du générateur lors de l'électrodéposition du métal.

Lors de l'attaque chimique, le réacteur joue le rôle de générateur électrique. Il est alors raccordé électriquement à un ou plusieurs systèmes de récupération d'énergie.

Une alimentation extérieure en courant continu fournit l'énergie extérieure nécessaire à l'électrodéposition et les couplages permettent l'inversion des sens des courants électriques.

Le dispositif très compact présente une grande densité de surface active dans un volume réduit. Le dispositif fonctionne, avantageusement, à des températures choisies, proches de la température ambiante, présente des coefficients d'échange thermique très améliorés et permet la récupération partielle et directe des énergies électriques induites dans les réactions chimiques de dissolution.

Le procédé permet de stocker de l'énergie électrique disponible, par exemple, lors des heures creuses et de restituer l'énergie électrique stockée avec un rendement élevé, par exemple lors des heures pleines.

**Revendications**

1. Dispositif électrochimique pour le stockage de l'énergie électrique comprenant :

    - un réacteur (1), muni de :

        ◦ une paroi latérale (2),
        ◦ une paroi supérieure (3),
        ◦ une paroi inférieure (5),
        ◦ une entrée d'électrolyte (7),
        ◦ une sortie d'électrolyte (8),

    - une pluralité d'électrodes $E_x$ avec x un entier allant de 1 à n, disposées dans le réacteur (1),

**caractérisé en ce que** les électrodes sont sous la forme de cônes et de troncs de cônes, disposées en alternance, et agencées de sorte que la partie évasée de chaque électrode soit dirigée vers la paroi supérieure (3) ou la paroi inférieure (5) du réacteur, les troncs de cônes venant en contact avec la paroi latérale (2) du réacteur (1), les sommets des cônes définissant un axe traversant les zones ouvertes des troncs de cône.

2. Dispositif électrochimique (1) selon la revendication 1, **caractérisé en ce que** les électrodes $E_x$ sont munies d'une face anodique (9) et d'une face cathodique (10), la face anodique (9) et la face cathodique (10) étant réalisées en matériaux différents.

3. Dispositif électrochimique selon la revendication 2, **caractérisé en ce que** la face anodique (9) est recouverte d'un fil de plomb enroulé sous la forme d'une spirale conique de « Pappus », les spires du fil de plomb formant la spirale conique de « Pappus » étant jointives, de manière à recouvrir la surface anodique.

4. Dispositif selon l'une quelconque des revendications précédentes, **caractérisé en ce que** les électrodes $E_x$ ont la même valeur d'aire.

5. Dispositif selon l'une quelconque des revendications précédentes, **caractérisé en ce que** la paroi supérieure (3) et la paroi inférieure (5) sont de forme conique.

6. Dispositif selon la revendication précédente, **caractérisé en ce que** les cônes formant les électrodes $E_x$, la paroi supérieure (3) et la paroi inférieure (5) sont sensiblement parallèles entre eux.

7. Dispositif électrochimique selon l'une quelconque des revendications 1 à 6, **caractérisé en ce que** :

    - l'arrivée de l'électrolyte (7) est disposée au niveau de la paroi supérieure (3),
    - la sortie d'électrolyte (8) est disposée dans la partie inférieure du réacteur, entre la paroi inférieure (5) du réacteur et l'électrode $E_n$ (2),
    - les électrodes $E_x$ avec x un entier impair sont séparées de la paroi latérale (2) du réacteur (1) par un espace,
    - les électrodes additionnelles $E_x$ avec x un entier pair sont en contact avec la paroi latérale (2) du réacteur (1) et sont munies d'une ouverture au niveau du sommet du cône,

de manière à former un chemin d'écoulement de l'électrolyte, le chemin allant de l'entrée d'électrolyte (7) à la sortie d'électrolyte (8), en passant alternativement entre les électrodes $E_x$ avec x un entier impair et la paroi latérale (2) du réacteur (1) et dans les ouvertures disposées au niveau du sommet des cônes des électrodes $E_x$ avec x un entier pair.

8.  Dispositif électrochimique (1) selon l'une quelconque des revendications 1 à 7, **caractérisé en ce que** les électrodes $E_x$ sont isolées électriquement les unes autres.

9.  Dispositif selon l'une quelconque des revendications précédentes, **caractérisé en ce que** la paroi supérieure (3) forme une électrode, préférentiellement, une cathode.

10. Dispositif selon l'une quelconque des revendications précédentes, **caractérisé en ce que** la paroi inférieure (5) forme une électrode, préférentiellement, une anode.

11. Dispositif électrochimique (1) selon l'une quelconque des revendications 1 à 10, **caractérisé en ce que** le dispositif comprend un réservoir d'électrolyte connecté à l'arrivée d'électrolyte (7) et à la sortie d'électrolyte (8) du réacteur (1), de manière à former un circuit fermé.

12. Dispositif électrochimique (1) selon la revendication précédente, **caractérisé en ce que** le dispositif comprend au moins un deuxième réacteur comportant une pluralité d'électrodes, les deux réacteurs étant montés en série, les réacteurs étant connectés électriquement, et **en ce que** le deuxième réacteur est disposé entre le premier réacteur et le réservoir d'électrolyte, la sortie d'électrolyte du premier réacteur étant connectée à l'entrée d'électrolyte du deuxième réacteur, et la sortie d'électrolyte du deuxième réacteur étant connectée au réservoir d'électrolyte.

13. Dispositif électrochimique (1) selon l'une quelconque des revendications précédente, **caractérisé en ce que** la première électrode (4) est raccordée électriquement à la borne négative d'une alimentation électrique et **en ce que** la deuxième électrode (6) est raccordée à la borne positive de l'alimentation électrique.

14. Dispositif électrochimique (1) selon l'une quelconque des revendications précédentes, **caractérisé en ce que** la première électrode (4) et la deuxième électrode (6) sont raccordées à un système de récupération d'énergie.

15. Procédé de stockage d'énergie électrique, comprenant les étapes successives suivantes :

    - fournir un dispositif électrochimique selon l'une quelconque des revendications 1 à 11,

- introduire un electrolyte dans le dispositif électrochimique, l'électrolyte contenant des ions métalliques,
- relier électriquement la première électrode (4) à la borne négative d'une alimentation électrique et la deuxième électrode (6) à la borne positive de d'une alimentation électrique,
- fournir de l'énergie électrique pour réduire les ions métalliques sur les électrodes du dispositif électrochimique, de façon à former une pile métal électrolysable.

16. Procédé selon la revendication 15, **caractérisé en ce que** le procédé comporte, après la formation de la pile métal électrolysable, une phase de fonctionnement de ladite pile, la phase de fonctionnement comprenant la dissolution du métal déposé de manière à produire de l'énergie électrique.

17. Procédé selon la revendication 16, **caractérisé en ce que**, lors de la dissolution du métal, la première électrode (4) et la deuxième électrode (6) sont reliées à un système de récupération d'énergie.

18. Procédé selon l'une des revendications 16 et 17, **caractérisé en ce que** l'électrolyte, utilisé pour former la pile métal électrolysable, est réutilisé pour la phase de fonctionnement de ladite pile.

19. Procédé selon l'une quelconque des revendications 15 à 18, **caractérisé en ce que**, après la formation de la pile métal électrolysable, l'électrolyte est vidé du réacteur (1).

**Patentansprüche**

1.  Elektrochemische Vorrichtung zur Speicherung elektrischer Energie, umfassend:

    - einen Reaktor (1), versehen mit:

        ◦ einer Seitenwand (2),
        ◦ einer oberen Wand (3),
        ◦ einer unteren Wand (5),
        ◦ einem Elektrolyteinlass (7),
        ◦ einem Elektrolytauslass (8),

    - eine Vielzahl von Elektroden $E_x$, die im Reaktor (1) angeordnet sind, wobei x eine Ganzzahl von 1 bis n ist,

    **dadurch gekennzeichnet, dass** die Elektroden in Form von Kegeln und Kegelstümpfen vorliegen, die abwechselnd und derart angeordnet sind, dass der aufgeweitete Teil jeder Elektrode zur oberen Wand (3) oder zur unteren Wand (5) des Reaktors hin gerichtet ist, wobei die Kegelstümpfe mit der Seitenwand (2) des Reaktors (1) in Kontakt kommen, wobei die Spitzen der Kegel eine Achse definieren, die durch die offenen Bereiche der Kegelstümpfe geht.

2. Elektrochemische Vorrichtung (1) nach Anspruch 1, **dadurch gekennzeichnet, dass** die Elektroden $E_x$ mit einer Anodenseite (9) und einer Kathodenseite (10) versehen sind, wobei die Anodenseite (9) und die Kathodenseite (10) aus unterschiedlichen Materialien hergestellt sind.

3. Elektrochemische Vorrichtung nach Anspruch 2, **dadurch gekennzeichnet, dass** die Anodenseite (9) mit einem Bleidraht bedeckt ist, der in Form einer konischen "Pappus"-Spirale gewickelt ist, wobei die Windungen des Bleidrahts, die die konische "Pappus"-Spirale bilden, so aneinander anliegen, dass sie die Anodenseite bedecken.

4. Vorrichtung nach einem der vorherigen Ansprüche, **dadurch gekennzeichnet, dass** die Elektroden $E_x$ denselben Flächenwert haben.

5. Vorrichtung nach einem der vorherigen Ansprüche, **dadurch gekennzeichnet, dass** die obere Wand (3) und die untere Wand (5) kegelförmig sind.

6. Vorrichtung nach dem vorherigen Anspruch, **dadurch gekennzeichnet, dass** die Kegel, die die Elektroden $E_x$, die obere Wand (3) und die untere Wand (5) bilden, im Wesentlichen parallel zueinander sind.

7. Elektrochemische Vorrichtung nach einem der Ansprüche 1 bis 6, **dadurch gekennzeichnet, dass**:

   - der Elektrolyteinlass (7) an der oberen Wand (3) angeordnet ist,
   - der Elektrolytauslass (8) im unteren Teil des Reaktors zwischen der unteren Wand (5) des Reaktors und der Elektrode $E_n$ (2) angeordnet ist,
   - die Elektroden $E_x$ mit ungerader Ganzzahl x durch einen Zwischenraum von der Seitenwand (2) des Reaktors (1) getrennt sind,
   - die zusätzlichen Elektroden $E_x$ mit gerader Ganzzahl x mit der Seitenwand (2) des Reaktors (1) in Kontakt sind und mit einer Öffnung an der Spitze des Kegels versehen sind,

   wodurch ein Strömungsweg des Elektrolyts gebildet wird, wobei der Weg vom Elektrolyteinlass (7) zum Elektrolytauslass (8) führt, indem er abwechselnd zwischen den Elektroden $E_x$ mit ungerader Ganzzahl x und der Seitenwand (2) des Reaktors (1) und durch die Öffnungen verläuft, die an der Spitze der Kegel der Elektroden $E_x$ mit gerader Ganzzahl x angeordnet sind.

8. Elektrochemische Vorrichtung (1) nach einem der Ansprüche 1 bis 7, **dadurch gekennzeichnet, dass** die Elektroden $E_x$ elektrisch voneinander isoliert sind.

9. Vorrichtung nach einem der vorherigen Ansprüche, **dadurch gekennzeichnet, dass** die obere Wand (3) eine Elektrode, bevorzugt eine Kathode bildet.

10. Vorrichtung nach einem der vorherigen Ansprüche, **dadurch gekennzeichnet, dass** die untere Wand (5) eine Elektrode, bevorzugt eine Anode bildet.

11. Elektrochemische Vorrichtung (1) nach einem der Ansprüche 1 bis 10, **dadurch gekennzeichnet, dass** die Vorrichtung einen Elektrolytbehälter umfasst, der derart mit dem Elektrolyteinlass (7) und mit dem Elektrolytauslass (8) des Reaktors (1) verbunden ist, dass ein geschlossener Kreislauf gebildet wird.

12. Elektrochemische Vorrichtung (1) nach dem vorherigen Anspruch, **dadurch gekennzeichnet, dass** die Vorrichtung mindestens einen zweiten Reaktor mit einer Vielzahl von Elektroden umfasst, wobei die zwei Reaktoren in Reihe geschaltet sind und die Reaktoren elektrisch verbunden sind, und dass der zweite Reaktor zwischen dem ersten Reaktor und dem Elektrolytbehälter angeordnet ist, wobei der Elektrolytauslass des ersten Reaktors mit dem Elektrolyteinlass des zweiten Reaktors verbunden ist und der Elektrolytauslass des zweiten Reaktors mit dem Elektrolytbehälter verbunden ist.

13. Elektrochemische Vorrichtung (1) nach einem der vorherigen Ansprüche, **dadurch gekennzeichnet, dass** die erste Elektrode (4) mit dem Minuspol einer Stromversorgung elektrisch verbunden ist, und dass die zweite Elektrode (6) mit dem Pluspol der Stromversorgung verbunden ist.

14. Elektrochemische Vorrichtung (1) nach einem der vorherigen Ansprüche, **dadurch gekennzeichnet, dass** die erste Elektrode (4) und die zweite Elektrode (6) mit einem Energierückgewinnungssystem verbunden sind.

15. Verfahren zur Speicherung elektrischer Energie, umfassend die folgenden aufeinanderfolgenden Schritte:

   - Bereitstellen einer elektrochemischen Vorrichtung nach einem der Ansprüche 1 bis 11,
   - Einleiten eines Elektrolyts in die elektrochemische Vorrichtung, wobei der Elektrolyt Metall-Ionen enthält,
   - elektrisches Verbinden der ersten Elektrode (4) mit dem Negativpol einer Stromversorgung und der zweiten Elektrode (6) mit dem Pluspol einer Stromversorgung,
- Zuführen von elektrischer Energie zur Reduktion der Metall-Ionen auf den Elektroden der elektrochemischen Vorrichtung, um eine elektrolysierbare Metall-Zelle zu bilden.

16. Verfahren nach Anspruch 15, **dadurch gekennzeichnet, dass** das Verfahren nach dem Bilden der elektrolysierbaren Metall-Zelle eine Betriebsphase dieser Zelle umfasst, wobei die Betriebsphase das Auflösen des abgelagerten Metalls umfasst, um elektrische Energie zu erzeugen.

17. Verfahren nach Anspruch 16, **dadurch gekennzeichnet, dass** die erste Elektrode (4) und die zweite Elektrode (6) beim Auflösen des Metalls mit einem Energierückgewinnungssystem verbunden sind.

18. Verfahren nach einem der Ansprüche 16 und 17, **dadurch gekennzeichnet, dass** der Elektrolyt, der zum Bilden der elektrolysierbaren Metallzelle verwendet wurde, für die Betriebsphase der Zelle wiederverwendet wird.

19. Verfahren nach einem der Ansprüche 15 bis 18, **dadurch gekennzeichnet, dass** der Elektrolyt nach der Bildung der elektrolysierbaren Metallzelle aus dem Reaktor (1) abgelassen wird.

## Claims

1. Electrochemical device for storing electric power comprising:

   - a reactor (1) provided with:

     ◦ a side wall (2),
     ◦ a top wall (3),
     ◦ a bottom wall (5),
     ◦ an electrolyte inlet (7),
     ◦ an electrolyte outlet (8),

   - a plurality of electrodes Ex with x an integer between 1 and n, located in the reactor (1),

   **characterized in that** the electrodes being in the form of cones and frusta, arranged alternately and fitted in such a way that the tapered part of each electrode is directed towards the top wall (3) or the bottom wall (5) of the reactor, the frusta coming into contact with the side wall (2) of the reactor (1), the apexes of the cones defining an axis passing through the open areas of the frusta.

2. Electrochemical device (1) according to claim 1, **characterized in that** the electrodes $E_x$ are provided

with an anodic surface (9) and a cathodic surface (10), the anodic surface (9) and cathodic surface (10) being made from different materials.

3. Electrochemical device according to claim 2, **characterized in that** the anodic surface (9) is covered by a lead wire wound in the form of a "Pappus" conical spiral, the turns of the lead wire forming the "Pappus" conical spiral being contiguous, so as to cover the anodic surface.

4. Device according to any of the preceding claims, **characterized in that** the electrodes Ex have the same area value.

5. Device according to any one of the foregoing claims, **characterized in that** the top wall (3) and bottom wall (5) are of conical shape.

6. Device according to the previous claim, **characterized in that** the cones forming the electrodes $E_x$, the top wall (3) and bottom wall (5) are substantially parallel to one another.

7. Electrochemical device according to any one of claims 1 to 6, **characterized in that** :

   - the electrolyte inlet (7) is located in the top wall (3),
   - the electrolyte outlet (8) is located in the bottom part of the reactor, between the bottom wall (5) of the reactor and the electrode $E_n$ (2),
   - the electrodes $E_x$ with x an odd integer are separated from the side wall (2) of the reactor (1) by a space,
   - the additional electrodes $E_x$ with x an even integer are in contact with the side wall (2) of the reactor (1), and are provided with an opening at the apex of the cone,

   so as to form a flow path of the electrolyte, the path going from the electrolyte inlet (7) to the electrolyte outlet (8), passing alternately between the electrodes $E_x$ with x an odd integer and the side wall (2) of the reactor (1) and in the openings arranged at the apex of the cones of the electrodes $E_x$ with x an even integer.

8. Electrochemical device (1) according to any one of claims 1 to 7, **characterized in that** the electrodes $E_x$ are electrically insulated from one another.

9. Device according to any one of the foregoing claims, **characterized in that** the top wall (3) forms an electrode, preferentially a cathode.

10. Device according to any one of the foregoing claims, **characterized in that** the bottom wall (5) forms an electrode, preferentially an anode.

11. Electrochemical device (1) according to any one of claims 1 to 10, **characterized in that** the device comprises an electrolyte tank connected to the electrolyte inlet (7) and to the electrolyte outlet (8) of the reactor (1) so as to form a closed circuit.

12. Electrochemical device (1) according to the previous claim, **characterized in that** the device comprises at least a second reactor comprising a plurality of electrodes, the two reactors being mounted in series, the two reactors being electrically connected, and **in that** the second reactor is located between the first reactor and the electrolyte tank, the electrolyte outlet of the first reactor being connected to the electrolyte inlet of the second reactor, and the electrolyte outlet of the second reactor being connected to the electrolyte tank.

13. Electrochemical device (1) according to any one of the foregoing claims, **characterized in that** the first electrode (4) is electrically connected to the negative terminal of an electric power supply and **in that** the second electrode (6) is connected to the positive terminal of the electric power supply.

14. Electrochemical device (1) according to any one of the foregoing claims, **characterized in that** the first electrode (4) and second electrode (6) are connected to an electric power recovery system.

15. Method for storing electric power, comprising the following successive steps:

> - providing an electrochemical device according to any one of claims 1 to 11,
> - performing inlet of an electrolyte to the electrochemical device, the electrolyte containing metal ions,
> - electrically connecting the first electrode (4) to the negative terminal of an electric power supply and the second electrode (6) to the positive terminal of an electric power supply,
> - providing electric power to reduce the metal ions on the electrodes of the electrochemical device so as to form an electrolyzable metal battery.

16. Method according to claim 15, **characterized in that**, after formation of the electrolyzable metal battery, the method comprises the operating phase comprising dissolution of the deposited metal so as to produce electric power.

17. Method according to claim 16, **characterized in that**, when dissolution of the metal takes place, the first electrode (4) and second electrode (6) are connected to an power recovery system.

18. Method according to one of claims 16 and 17, **characterized in that** the electrolyte, used to form the electrolyzable metal battery, is reused for the operating phase of said battery.

19. Method according to any one of claims 15 to 18, **characterized in that**, after formation of the electrolyzable metal battery, the electrolyte is drained from the reactor (1).

Figure 1

Figure 2

**RÉFÉRENCES CITÉES DANS LA DESCRIPTION**

**Documents brevets cités dans la description**

- WO 2011015723 A
- US 20100213052 A
- EP 0264263 A
- FR 2948654